Europäisches Patentamt

European Patent Office

Office européen des brevets

(11) Veröffentlichungsnummer: **0 012 374**
**B1**

(12) **EUROPÄISCHE PATENTSCHRIFT**

(45) Veröffentlichungstag der Patentschrift: **15.12.82**

(21) Anmeldenummer: **79104964.6**

(22) Anmeldetag: **06.12.79**

(51) Int. Cl.³: **G 06 K 19/08,**
**B 42 D 15/02, G 06 K 19/02**

(54) Verfahren zur Herstellung von Identifikationskarten.

(30) Priorität: **14.12.78 DE 2853893**

(43) Veröffentlichungstag der Anmeldung:
**25.06.80 Patentblatt 80/13**

(45) Bekanntmachung des Hinweises auf die Patenterteilung:
**15.12.82 Patentblatt 82/50**

(84) Benannte Vertragsstaaten:
**BE CH DE FR GB IT NL**

(56) Entgegenhaltungen:
DE - A - 2 012 722
DE - A - 2 262 507
DE - A - 2 545 799
FR - A - 2 139 347
FR - A - 2 161 663
FR - A - 2 305 806
FR - A - 2 331 455
FR - A - 2 336 745
LU - A - 81 049
US - A - 3 152 901
US - A - 3 402 488

(73) Patentinhaber: **HOECHST AKTIENGESELLSCHAFT**
**Postfach 80 03 20**
**D-6230 Frankfurt/Main 80 (DE)**

(72) Erfinder: **Moraw, Roland, Dr.**
**Buchenweg 4**
**D-6200 Wiesbaden-Naurod (DE)**
Erfinder: **Unger, Manfred, Dr.**
**Krauskopfallee 40**
**D-6229 Schlangenbad 5 (DE)**
Erfinder: **Walter, Helmut**
**Feldbergblickstrasse 7**
**D-6200 Wiesbaden (DE)**

Courier Press, Leamington Spa, England.

## Verfahren zur Herstellung von Identifikationskarten

Die Erfindung betrifft ein Verfahren zur Herstellung von Identifikationskarten, die aus mehreren Schichten aufgebaut sind, bei dem eine mit einem Lichtbild und mit Datenblock versehene Vorlage auf einen Aufzeichnungsträger abgebildet wird und ein Kartenkern mit einer unteren und oberen transparenten Schutzfolie aus Polymerenmaterial kaschiert wird.

Derartige Karten werden als Informations- bzw. Datenträger für Personalausweise, Pässe, Scheckkarten, Kreditkarten, Identifikationskarten und dergleichen Ausweismittel verwendet, die sowohl gegen totale Fälschungen durch nachgemachte Karten als auch gegenüber Fälschungen durch teilweise Änderung der personenbezogenen Daten gesichert werden müssen.

Ein Verfahren der eingangs beschriebenen Art ist aus der US—A—3,402,488 bekannt, bei dem eine mit einem Lichtbild und mit einem Datenblock versehene Vorlage fotografisch auf ein Filmnegativ abgebildet wird. Von einer Reihe von Filmnegativen werden mittels einer Kamera Fotografien auf einem einzigen Abschnitt eines rollenförmigen Fotopapiers nach der Belichtung entwickelt, der gesamte Abschnitt durch eine einzige längliche Schutzfolie geschützt und anschließend in die einzelnen, fotografisch hergestellten Karten vor deren Faltung geschnitten. Eine elektrofotografische Abbildung auf einem Aufzeichnungsträger mit direkter Übertragung und Fixierung auf einem Kartenkernmaterial ist ebensowenig vorgesehen wie eine serielle Kaschierung der einzelnen Kartenkerne mit Schutzfolien in einer Kaschierpresse.

In der DE—A—2 262 507 ist die elektrofotografische Abbildung zum Zweck der Herstellung von mehrlagigen Identifikationskarten beschrieben, wobei das Ladungsbild vom Fotoleiter auf das Empfangsmaterial übertragen wird, um erst auf diesem entwickelt zu werden. Das Empfangsmaterial besteht aus einer isolierenden Trägerschicht und einer elektrisch leitenden Schicht und ist somit heterogen aufgebaut, wodurch das Delaminieren einer derartigen Karte erleichtert wird.

Aus der DE—A—2 012 722 ist die Speicherung von Kartenrohlingen in einem Zwischenspeicher vor dem Kaschieren bekannt. Der Kartenrohling ist aus einzelnen Schichten zusammengesetzt, die aus unterschiedlichen Materialien bestehen, wobei die eine Schicht eine Folie aus transparentem Material ist und auf einer Fläche einer weiteren Mittelschicht aufgeklebt ist, während eine fotografische Schicht auf der Zwischenschicht zwischen der Folie und der Mittelschicht sich befindet. Diese Karte besitzt somit gleichfalls einen heterogenen Aufbau.

Aus der US—A—3,152,901 ist es bekannt, einen film mit einer Indexmarkierung zu versehen, die fotoelektrisch abgetastet wird und den Film entsprechend der Markierung in Längen korrespondierend zu der Länge eines Kunststoffblattes zu schneiden. Dabei kann es sich um ein Blatt aus Polyvinylchlorid handeln, auf das für die Kartenherstellung Zeichen gedruckt werden. Ein Laminieren dieses Blattes mit Schutzfolien aus Polyvinylchlorid ist nicht vorgesehen.

Die Verwendung von Sicherheitsmerkmalen in Gestalt eines Spezialpapiers, das Dickenunterschiede aufweist, die beim Plastifizieren durch die Folien hindurch wiedergegeben werden, geht aus der DE—A—2 308 876 hervor.

Die Verwendung farbiger Lichtbilder bei Identifikationskarten ist in der FR—A—2 305 806 erwähnt.

In der FR—A—2 331 455 ist beschrieben, daß Teile von Identifikationskarten mit in sich gleichförmigen Reliefgitterstrukturen versehen sind, die im vorzugsweise reflektierten Licht einen einheitlichen Farbschimmer ergeben. Diese bekannten Reliefgitterstrukturen ergeben keine mehrfarbigen Gitterbilder.

In der FR—A—2 336 745 ist die Überlagerung von Hologrammen auf Identifikationskarten beschrieben, wobei die geometrischen Aufzeichnungsparameter wie Ortsfrequenz und Azimut der Hologramme geändert werden. Erst die rekonstruierten Bilder der Hologramme in Forme einer Intensitätsverteilung sind entsprechend den Aufzeichnungsparametern zueinander horizontal versetzt nicht, jedoch die Hologramme als solche.

Aus der DE—B1 21 63 943 ist eine Personenidentifikationskarte bekannt, die eine Kombination eines Schichtträgers, einer elektrisch leitenden Schicht, einer Sperrschicht, einer fotoleitfähigen Schicht mit einem organischen Fotoleiter — gegebenenfalls eine Abdeckschicht—, einer Schutzschicht auf der fotoleitfähigen Schicht oder auf der Abdeckschicht, einer Schutzschicht auf der Rückseite des Schichtträgers und gegebenenfalls einer Abdeckschicht auf der letztgenannten Schutzschicht umfaßt. Bei dieser Personenidentifikationskarte wird eine Anzahl von unterschiedlichen Materialien zu einem Verbund zusammengefügt, der wegen der fehlenden Homogenität der einzelnen Schichten auflösbar ist, so daß Fälschungen vorgenommen werden können.

Die Herstellung dieser Personenidentifikationskarte erfolgt in der Weise, daß die erforderlichen Angaben mit Hilfe einer Offsetdruck-Maschine auf die Innenseite des durchsichtigen, nichtplastischen Polyvinylchloridfilms gedruckt werden. Darauf wird eine Druckfarbenschicht gedruckt, die eine große Deckkraft besitzt und nur die für die Unterschrift und das Foto vorgesehenen Flächen frei läßt.

Die fotoleitfähige Schicht mit dem organischen Fotoleiter wird in einer Dunkelkammer mit Hilfe einer Sprühentladung auf eine Spannung von —6 kV aufgeladen, in eine Kamera eingebracht, in der ein Objektiv zum Fotografieren des Karteninhabers und eine Beleuchtungseinrichtung kombiniert sind, ferner ein Objektiv zum Fotografieren von Zeichen mit der Beleuchtungseinrichtung. Nach der bilderzeugenden Belichtung werden die elektrostatischen Bilder mit einem Flüssigentwickler entwickelt, getrocknet und ohne Fixiervorgang mit Hilfe einer Warmpresse auf die fotoleitfähige Schicht der zuvor erstellten Oberflächenschutzschicht aus dem Polyvinylchloridfilm aufgeklebt. Auf die Rückseite wird dann ein durchsichtiger, nichtplastischer Polyvinylchloridfilm gedruckt, der auf seiner Innenseite erforderliche Angaben enthalten kann. Auf die ganze Fläche wird dann noch eine weiße Abdeckschicht gedruckt, die eine als leitende Schicht verwendete Aluminiumfolie verdeckt. Die weiße Abdeckschicht kann auch direkt auf die Rückseite der fotoleitfähigen Schicht mit dem organischen Fotoleiter gedruckt werden oder es kann als Grundplatte des lichtempfindlichen Elements eine milchigweiße Platte verwendet werden.

Bei der Herstellung dieser Personenidentifikationskarte wird der Aufzeichnungsträger für das Personenbild zugleich der Bildträger für das elektrostatische Ladungsbild, eine Bildübertragung findet nicht statt, und als Kartenkern mit Polyvinylchloridfilmen, die auf den Innenseiten erforderliche Angaben enthalten können, kaschiert. Es liegt auf der Hand, daß beei diesem bekannten Herstellungsverfahren eine serienmäßige Herstellung von Identifikationskarten nach Art einer Fließbandfertigung zum Erreichen hoher Stückzahlen ausscheidet, da für jede einzelne Karte der jeweilige Karteninhaber an Ort und Stelle fotografiert werden muß, ein Vorgang, der erfahrungsgemäß zeitraubend ist.

Aufgabe der Erfindung ist es, ein Verfahren zur Herstellung von Identifikationskarten zu schaffen, das eine hohe Fertigungsleistung in der Größenordnung von 1000 bis 3000 Karten pro Stunde bei fließbandähnlicher Fertigung besitzt und durch das Karten erhalten werden, die durch das verwendete Material für die enzelnen Schichten weitgehend gegen Nachahmungen und Fälschungen gesichert sind.

Diese Aufgabe wird erfindungsgemäß durch ein Verfahren nach dem Oberbegriff des Anspruchs 1 dadurch gelöst, daß gespeichertes Kartenkernmaterial einzeln und automatisch einer elektrofotografischen Kopiervorrichtung zugeführt wird, daß in der Kopiervorrichtung die Informationen der Vorlage elektrofotografisch auf den Aufzeichnungsträger abgebildet, entwickelt und direkt auf das Kartenkernmaterial übertragen und fixiert werden, daß die seriell fertiggestellten Kartenkerne in einem Zwischenspeicher gespeichert und von dort aus einer Kaschierpresse zugeleitet werden, in der sie mit den Schutzfolien aus dem gleichen polymeren Material wie das Kartenkernmaterial zu Identifikationskarten-Rohlingen kaschiert werden.

In Ausgestaltung des Verfahrens werden die Identifikationskarten-Rohlinge nach dem Kaschieren fotomechanisch abgetastet und entsprechend vorhandener Kontrollzeichen ausgerichtet, bevor sie zu den fertigen Identifikationskarten gestanzt werden. Die weitere vorteilhafte Ausgestaltung des erfindungsgemäßen Verfahrens ergibt sich aus den Patentansprüchen 3 bis 11.

Mit der Erfindung wird der Vorteil einer zentralen Herstellung der Identifikationskarten erreicht, wodurch eine Kontrolle der für die Ausweise benötigten Materialien und Techniken erleichtert wird. Eine häufige Neuausstellung von derartigen Identifikationskarten im einjährigen oder mehrjährigen Turnus, wie dies in ähnlicher Weise von den Banken mit den Scheckkarten gehandhabt wird, gegebenenfalls mit neuen Sicherheitsmerkmalen auf den verwendeten Materialien, erschwert die Ausarbeitung von Fälschungstechniken. Mit der Erfindung wird ferner der Vorteil erzielt, daß der Kartenkern mit sämtlichen Daten des vorgesehenen Datenblocks und mit einem oder auch zwei Paßbildern mit Hilfe der elektrofotografischen Kopiertechnik in einem einzigen Verfahrensschritt aufgebracht wird, analog zu der schon seit langem bewährten elektrofotografischen Bürokopiertechnik. Diese individuelle und gleichzeitig schnelle Aufzeichnungstechnik begünstigt die zentrale Herstellung der Identifikationskarten und deren häufige Neuausstellung.

Nachfolgend werden Ausführungsbeispiele der Erfindung anhand von schematischen Darstellungen des Aufbaus von Verarbeitungsstrecken für die Herstellung von Identifikationskarten in den Zeichnungen näher beschrieben.

Es zeigen:

Fig. 1 in schematischer Darstellung die einzelnen Verfahrensstationen zur Herstellung einer mit Sicherheitsdrucken und zumindest einem Lichtbild versehenen Identifikationskarte,

Fig. 2 eine zu Fig. 1 ähnliche Anordnung zur Herstellung einer mit einer Reliefgitterstruktur im Kartenkern ausgestatteten Identifikationskarte, und

Fig. 3 eine zu Fig. 1 ähnliche Anordnung zur Herstellung einer mit einem Hologramm des Kartenkerns versehenen Identifikationskarte.

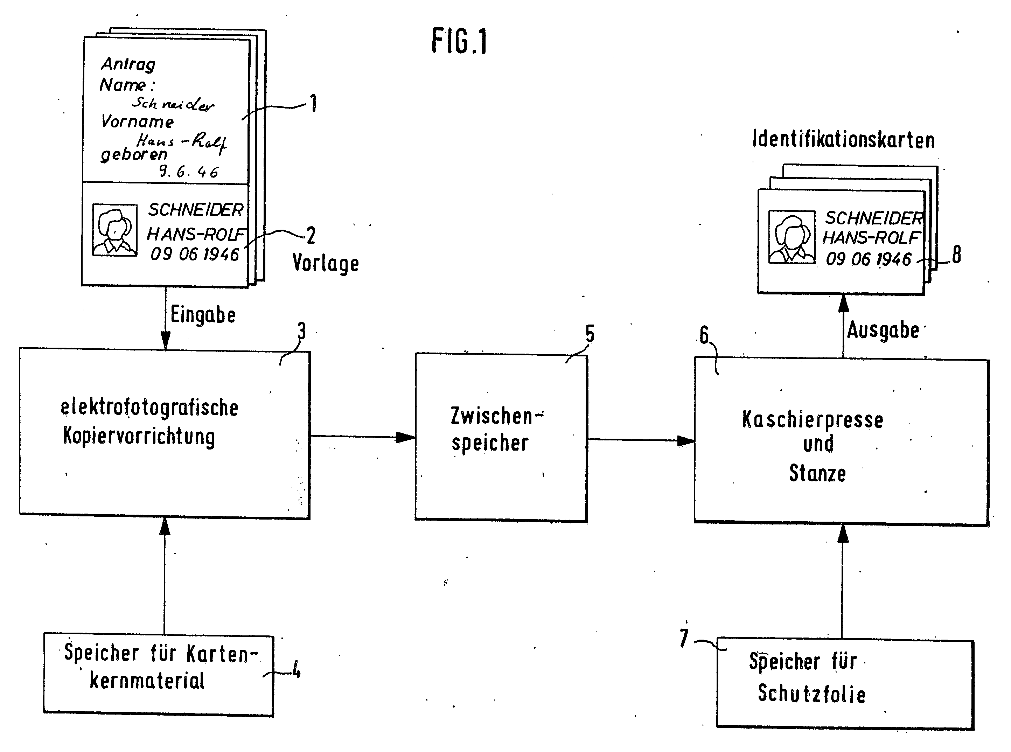

Fig. 1 zeigt schematisch den Produktionsablauf für die Herstellung von Identifikationskarten. Ausgegangen wird von Antragsformularen 1, die im oberen Teil jeweils persönliche Angaben wie Vor- und Zunamen, Geburtsdatum, Beruf, akademischen Grad, Wohnadress u. dgl. des zukünftigen Karteninhabers enthalten. Im unteren Teil sind diese Angaben auf einer Kartenvorlage 2 maschinengeschrieben in Form eines Datenblocks eingetragen. Die Kartenvorlage 2 ist des weiteren mit einem Lichtbild des Karteninhabers sowie mit seiner Unterschrift versehen. Das einzelne Antragsformular 1 liegt an einer Einzugsvorrichtung einer elektrofotografischen Kopiervorrichtung 3 an und wird vollautomatisch auf die Vorlagenbühne der Kopiervorrichtung 3 transportiert.

Da elektrofotografische Kopiervorrichtungen weitgehend bekannt sind, wird von deren Funktionsbeschreibung abgesehen.

Aus einem Speicher 4 für Kartenkernmaterial werden Folien aus Polymerenmaterial, wie Polymere auf Polyvinylchloridbasis, der elektrofotografischen Kopiervorrichtung 3 vollautomatisch zugeführt. Die auf dem Aufzeichnungsträger der Kopiervorrichtung 3 abgebildeten latenten Ladungsbilder werden mit Toner zu schwarz-weiß oder zu farbigen Pulverbildern entwickelt und auf das zugeführte Kartenkernmaterial, das den Bildträger bildet, übertragen. Die Fixiertemperatur für die Tonerbilder wird dabei unterhalb der Erweichungstemperatur des Kartenkernmaterials gehalten. Das Kartenkernmaterial mit den Tonerbildern gelangt anschließend in einen Zwischenspeicher 5 und von diesem in eine Kaschierpresse 6 mit kombinierter Stanze. Die Kaschierpresse 6 wird mit transparenten Schutzfolien, z.B. Polymeren auf Polyvinylchloridbasis, aus einem Speicher 7 beschickt. In der Kaschierpresse 6 erfolgt die Kaschierung der Kartenkerne an der Vorder- und Rückseite mit je einer Schutzfolie. Die auf diese Weise erhaltenen Identifikationskarten-Rohlinge werden nach dem Kaschieren fotomechanisch abgetastet und entsprechend vorhandener Kontrollzeichen ausgerichtet, bevor sie von der Stanze zu fertigen Identifikationskarten 8 gestanzt und also solche ausgegeben werden. Das Kartenkernmaterial wird vor dem Einlegen in den Speicher 4 mit Sicherungsmerkmalen wie Guillochen bedruckt. Ebenso können die Schutzfolien für die Vorder- und Rückseiten der Identifikationskarten 8 mit ein- order mehrfarbigen Sicherungsmerkmalen bedruckt werden. Neben glattem Kartenkernmaterial wird bevorzugt auch aufgerauhtes Material verwendet, das leicht gerasterte Bilder mit etwas gröberer Auflösung also glattes Material ergibt, jedoch den Vorteil eines absolut sicheren Transportes des Bildträgers durch die Kopiervorrichtung 3 aufweist.

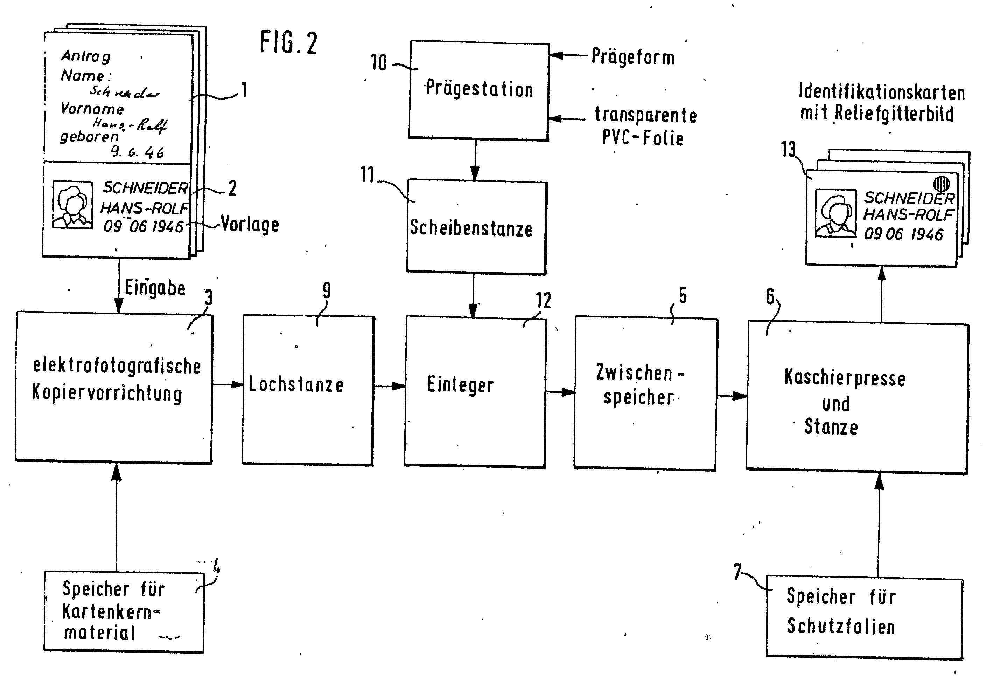

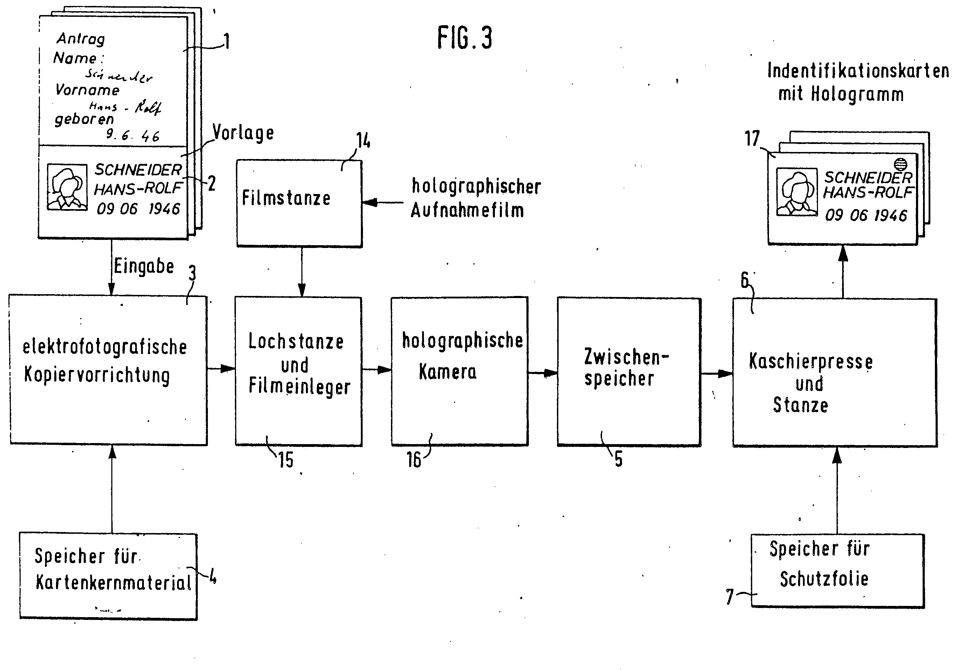

Anhand der Figuren 2 und 3 wird der Produktionsablauf für Identifikationskarten mit Reliefgitterbildern bzw. Hologrammen erläutert. Die mit den Bauteilen in der Anordnung nach Fig. 1 übereinstimmenden Teile sind mit denselben Bezugszeichen belegt und ihre Funktionsweise wird daher nicht nochmals beschrieben.

Die Herstellung der Identifikationskarten-Rohlinge mit Reliefgitterbildern nach Fig. 2 ist bis zur Ausgabe aus der elektrofotografischen Kopiervorrichtung 3 dieselbe wie bei der Anordnung nach Fig. 1. Danach wird in jeden Identifikationskarten-Rohling in einer Lochstanze 9 an geeigneter Stelle ein Loch zur Aufnahme eines einzusetzenden Reliefgitterbildes gestanzt. Anschließend wird der Identifikationskarten-Rohling in einen Einleger 12 befördert, in welchem in das gestanzte Loch das Reliefgitterbild, beispielsweise ein Hoheitszeichen wie der Bundesadler, Amts- oder Dienstsiegel oder dgl. eingesetzt wird. Das Reliefgitterbild wird im Durchlicht farbig wiedergegeben. Diese Gitterbilder sind äußerst schwer nachzuahmen, da sie aus Anordnungen von einigen hundert linienförmigen Reliefstrukturen pro Millimeter bestehen, wobei durch die jeweilige Relieftiefe die Bildfarbe bei der Wiedergabe bestimmt wird. Eine fotografische oder drucktechnische Nachahmung ist nicht möglich, weil die Farbeffekte nicht durch bestimmte Farbstoffe hervorgerufen werden, sondern auf Beugungs- und Interferenzeffekten beruhen. Die Herstellung der Gitterbilder erfolgt in einer Prägestation 10, in die eine Prägeform, beispielsweise ein Dienstsiegel oder der Bundesadler und/oder eine Serien-Nr. sowie eine transparente Prägefolie auf Polyvinylchloridbasis eingelegt werden. Die Folie in Bandform wird mittels des Prägestempels fortlaufend mit Reliefgitterbildern bedruckt. Von der Prägestation 10 wird die bedruckte Folie einer Scheibenstanze 11 zugeführt, in der die Reliefgitterbilder ausgestanzt werden. Danach gelangen die ausgestanzten Reliefgitterbilder in den Einleger 12 und werden dort an geeigneter Stelle in die ausgestanzen Löcher in die Identifikationskarten-Rohlinge eingesetzt, die über den Zwischenspeicher 5 in die Kaschierpresse 6 geführt werden. In der Kaschierpresse 6 muß durch geeignete Verfahrensführung darauf geachtet werden, daß das Reliefgitterbild während des Kaschierens nicht beschädigt wird. Nach dem Kaschieren der Rohlinge mit den Schutzfolien aus dem Speicher 7 in der Kaschierpresse 6 werden die Rohlinge auf das Endformat gestanzt und als Identifikationskarten 13 mit eingepaßten Reliefgitterbildern ausgegeben.

Die Herstellung der Identifikationskarten-Rohlinge nach Fig. 3 verläuft bis zur Ausgabe der Rohlinge aus der elektrofotografischen Kopiervorrichtung 3 analog zu den Produktionsabläufen nach den Fig. 1 und 2. Die Rohlinge werden in einer Lochstanze 15 mit kombiniertem Filmeinleger an geeigneter Stelle gelocht. In die Lochung wird ein Stück holografischen Films eingelegt, der von einer Filmstanze 14 zugeführt wird, welche aus einem holografischen Aufnahmefilm die Stücke in geeigneter Größe ausstanzt. Als geeignetes Material für den holografischen Film wird bevorzugt ein fotoleitender thermoplastischer Film verwendet. Die mit dem holografischen Film ausgestatteten Identifikationskarten-Rohlinge gelangen anschließend in eine holografische Kamera 16, in der der Datenblock und das Lichtbild der einzelnen Rohlinge durch entsprechende Faltung und Umlenkung des Strahlenganges eines Lasers auf das in der Lochung eingesetzte holografische Filmstück holografisch abgebildet werden. Das auf diese Weise erhaltene Hologramm wird sofort thermisch entwickelt und durch Kühlen fixiert.

Nach dem Erstellen der Hologramme in der holografischen Kamera 16 gelangen die Identifikationskarten-Rohlinge in den Zwischenspeicher 5 und von diesem in die Kaschierpresse 6 mit der angeschlossenen Stanze. Beim Kaschieren muß wieder durch geeignete Verfahrensführung, wie dies schon bei der Herstellung der Identifikationskarten-Rohlinge mit Reliefgitterbildern der Fall war, dafür gesorgt werden, daß die eingesetzten Hologramme nicht beschädigt werden. Nach dem Kaschiervorgang der Rohlinge mit den Schutzfolien aus dem Speicher 7 werden die Rohlinge auf das Endformat gestanzt und als Identifikationskarten 17 mit eingepaßten Hologrammen ausgegeben.

Das Schichtmaterial für die Kartenkerne kann zweckmäßigerweise auch mehrschichtig aufgebaut werden. In diesem Fall werden mehrere Schichten mit Sicherungsmerkmalen ausgestattet. Es ist auch möglich, das Lichtbild des Karteninhabers, eines Gegenstandes oder eines sonstigen Kennzeichnungsmerkmales zumindest auf zwei Schichten des Kartenkerns abzubilden, wobei diese Abbildungen so angeordnet werden, daß sie beim Zusammenfügen der Schichten zu dem endgültigen Kartenkern gegeneinander versetzt sind. Die vordere Abbildung des Lichtbildes erscheint dann bei der Betrachtung der Identifikationskarte in Draufsicht, während die Abbildung des hinteren Lichtbildes nur in Durchsicht zu erkennen ist.

**Patentansprüche**

1. Verfahren zur Herstellung von Identifikationskarten, die aus mehreren Schichten aufgebaut sind, bei dem eine mit einem Lichtbild und mit einem Datenblock versehene Vorlage auf einen Aufzeichnungsträger abgebildet wird und ein Kartenkern mit einer unteren und oberen transparenten Schutzfolie aus polymerem Material kaschiert wird, dadurch gekennzeichnet, daß gespeichertes Kartenkernmaterial einzeln und automatisch einer elektrofotografischen Kopiervorrichtung zugeführt wird, daß in der Kopiervorrichtung die Informationen der Vorlage elektrofotografisch auf den Aufzeichnungsträger abgebildet, entwickelt und direkt auf das Kartenkernmaterial übertragen und fixiert werden, daß die seriell fertiggestellten Kartenkerne in einem Zwischenspeicher gespeichert und von dort aus einer Kaschierpresse zugeleitet werden, in der sie mit den Schutzfolien aus gem gleichen polymeren Material wie das Kartenkernmaterial zu Identifikationskarten-Rohlingen kaschiert werden.

2. Verfahren nach Anspruch 1, dadurch gekennzeichnet, daß die Identifikationskarten-Rohlinge nach dem Kaschieren fotomechanisch abgetastet und entsprechend vorhandener Kontrollzeichen ausgerichtet werden, bevor sie zu den fertigen Identifikationskarten gestanzt werden.

3. Verfahren nach Anspruch 1, dadurch gekennzeichnet, daß für die Kartenkerne mattierte Folien verwendet werden, die durch Pigmentzusätze weiß eingefärbt sind.

4. Verfahren nach Anspruch 3, dadurch gekennzeichnet, daß das Folienmaterial für die Kartenkerne und für die Schutzfolien aus einem verschmelzbaren Polymer auf der Basis von Polyvinylchlorid besteht.

5. Verfahren nach Anspruch 4, dadurch gekennzeichnet, daß die Folie für die Kartenkerne vor dem elektrofotografischen Kopieren mit Sicherungsmerkmalen versehen wird.

6. Verfahren nach Anspruch 4, dadurch gekennzeichnet, daß die Lichtbilder und der Datenblock der Vorlage als weiß/grau/schwarz Tonerbilder auf dem Aufzeichnungsträger entwickelt und auf die Folie für die Kartenkerne übertragen werden.

7. Verfahren nach Anspruch 4, dadurch gekennzeichnet, daß die Lichtbilder und der Datenblock der Vorlage als farbige Tonerbilder auf dem Aufzeichnungsträger entwickelt und auf die Folie für die Kartenkerne übertragen werden.

8. Verfahren nach Anspruch 1 bis 7, dadurch gekennzeichnet, daß für die Kartenkerne eine aufgerauhte Folie verwendet wird.

9. Verfahren nach Anspruch 1, dadurch gekennzeichnet, daß das Schichtmaterial für die Kartenkerne mehrschichtig aufgebaut wird, daß einige Schichten mit Sicherungsmarkmalen versehen sind und daß das Lichtbild einer Person, eines Gegenstandes oder dgl. zumindest auf zwei Schichten eines Kartenkerns abgebildet wird, wobei die Abbildungen horizontal zueinander versetzt sind.

10. Verfahren nach Anspruch 1, dadurch gekennzeichnet, daß als Sicherungsmerkmale Reliefgitterbilder mit linienförmiger Gitterstruktur, deren Gittertiefe eine vorgegebene Bildfarbe bei der Wiedergabe bestimmt, in die Kartenkerne vor dem Kaschieren eingefügt werden.

11. Verfahren nach den Ansprüchen 4 und 5, dadurch gekennzeichnet, daß ein holografischer Film in einer Lochung in dem den Datenblock und ein Lichtbild aufweisenden Kartenkern befestigt wird, daß die Daten und Informationen des Kartenkerns holografisch auf diesen Film abgebildet und dieser thermisch entwickelt wird, und daß anschließend der Kartenkern mit dem in der Lochung befindlichen holografischen Film zu beiden Seiten mit Schutzfolien aus dem gleichen Polymerenmaterial wie das Kartenkernmaterial kaschiert wird.

**Claims**

1. A process for the manufacture of identity cards built-up of several layers, wherein an original provided with a photograph and a data block is electrophotographically reproduced on a recording carrier and a card core is laminated with a lower and upper transparent protective film of a polymer material, characterized in that the stored card core material is solely and automatically conveyed to an electrophotographic copying machine, wherein the informations of the original are electrophotographically reproduced on the recording carrier, developed and directly transferred and fixed on the card core material, wherein the card cores finished in series are stored in an intermediate-magazine and from there are conveyed to a lamination press in which they are laminated with protective films of the same polymer material used for the card core material to form the identity card blanks.

2. A process as claimed in claim 1, wherein the identity card blanks are photomechanically scanned after laminating and adjusted according to existing control marks, prior to being punched to the final identity cards.

3. A process as claimed in claim 1, wherein films having a matt colouring, which are dyed white by the addition of pigments, are used for the card cores.

4. A process as claimed in claim 3, wherein the film material used for the card cores and for the protective films comprise a fusible polymer based on polyvinyl chloride.

5. A process as claimed in claim 4, wherein the film used for the card cores is provided with security markings prior to being electrophotographically copied.

6. A process as claimed in claim 4, wherein the photographs and the data block of the original are developed as white/gray/black toner images on the recording carrier and are transferred to the film used for the card cores.

7. A process as claimed in claim 4, wherein the photographs and the data block of the original are developed as coloured toner images on the recording carrier and are transferred to the film used for the card cores.

8. A process as claimed in claims 1 to 7, wherein a roughened film is used for the card cores.

9. A process as claimed in claim 1, wherein the layer material used for the card cores is built up of several layers, wherein some of the layers are provided with security markings and wherein the photograph of a person, of an object or the like is reproduced on at least two layers of a card core, the reproductions being in a horizontal staggered arrangement with respect to one another.

10. A process as claimed in claim 1, wherein, prior to laminating, relief grid images having a linear grid structure the grid depth thereof determines a given image colour upon reproduction, are inserted into the card cores as security markings.

11. A process as claimed in claims 4 and 5, wherein a holographic film is fastened to a perforation in the card core carrying the data block and a photography, wherein the data and the informations of the card core are holographically reproduced on the film and the film is thermically developed, and wherein subsequently the card core with the holographic film present in the perforation is laminated on both sides with protective films of the same polymer material used for the card core material.

## Revendications

1. Procédé pour la fabrication de cartes d'identification constituées de plusieurs couches, qui consiste à reproduire sur un porteur d'enrigistrement un document original portant une photographie et un bloc de données et à enrober les faces supérieure et inférieure du noyau de la carte d'une feuille de protection transparente, en substance polymère, caractérisé en ce que le matériel du noyau des cartes, préalablement stocké, est dirigé isolément et automatiquement sur un appareil de reprographie électrophotographique, en ce que dans cet appareil reprographique les informations figurant sur le document original sont reproduites par un procédé électrophotographique et développées sur le porteur d'enregistrement pour être transférées et fixés directement sur le matériel du noyau de la carte, et en ce que ces noyaux fabriqués en séries sont stockés sur une plage d'attente avant d'être dirigés sur une presse à stratifier qui assure leur enrobage à l'aide de feuilles de protection de la même substance polymère que la substance composante du noyau et sort ainsi les ébauches des cartes d'identification.

2. Procédé selon la revendication 1, caractérisé en ce que les ébauches des cartes d'identification sont soumises, après leur enrobage, à un balayage photomécanique et placées en position appropriée en fonction des repères de contrôle avant de subir le découpage final qui leur donne la forme des cartes d'identification définitives.

3. Procédé selon la revendication 1, caractérisé en ce que pour les noyaux des cartes l'on utilise des feuilles opaques qui, par l'adjonction de colorants, prennent une couleur blanche.

4. Procéde selon la revendication 3, caractérisé en ce que les feuilles utilisées pour le noyau des cartes, ainsi que les feuilles de protection, sont réalisées à partir d'un polymère fusible à base de polychlorure de vinyle.

5. Procédé selon la revendication 4, caractérisé en ce que les feuilles des noyaux des cartes sont dotés de marques de sécurité avant d'être dirigées dans l'appareil à reprographier électrophotographique.

6. Procédé selon la revendication 4, caractérisé en ce que les photographies et le bloc de données du document original sont développées sur le porteur d'enregistrement sous forme d'images de toner noir/gris/blanc avant d'être transférées sur les feuilles des noyaux de cartes.

7. Procédé selon la revendication 4, caractérisé en ce que les photographies et le bloc de données du document original sont développés sur le porteur d'enregistrement sous forme d'images polychromes avant d'être transférées sur les feuilles des noyaux de cartes.

8. Procédé selon l'une des revendications 1 à 7, caractérisé en ce que pour les noyaux de cartes l'on utilise une feuille rugueuse.

9. Procédé selon la revendication 1, caractérisé en ce que la matériel laminaire utilisé pour les noyaux de cartes comprend plusieurs couches, en ce que certaines de ces couches comportent des marques de sécurité et en ce que la photographie d'une personne ou d'un objet etc ... est reproduite sur deux couches au moins d'un noyau, de telle façon que les photographies soient décalées horizontalement l'une par rapport à l'autre.

10. Procédé selon la revendication 1, caractérisé en ce que avant l'enrobage des noyaux l'on incorpore dans ceux-ci des marques de sécurité sous forme d'images tramées en relief constituées de lignes en relief, dont la profondeur des vallées entre les lignes détermine la couleur reflétée par l'image.

11. Procédé selon les revendications 4 et 5, caractérisé en ce qu'un film holographique est logé dans une ouverture pratiquée dans le noyau de la carte portant le bloc de données et une photographie, en ce que les données et les informations figurant sur le noyau sont reproduites par un procédé holographique sur ce même film qui est développé selon un procédé thermique et en ce que finalement le noyau portant le film holographique logé dans l'ouverture, est enrobé sur ses deux faces de feuilles de protection réalisées dans la même substance polymère que le matériel constituant la carte.

## FIG.1

Antrag
Name :
    Schneider
Vorname
    Hans - Rolf
geboren
    9. 6. 46

SCHNEIDER
HANS-ROLF
09 06 1946

— 1

— 2  Vorlage

Eingabe

Identifikationskarten

SCHNEIDER
HANS-ROLF
09 06 1946

— 8

Ausgabe

| 3 | 5 | 6 |
|---|---|---|
| elektrofotografische Kopiervorrichtung | Zwischen-speicher | Kaschierpresse und Stanze |

Speicher für Karten-kernmaterial — 4

7 — Speicher für Schutzfolie

0012374

FIG. 2

Antrag
Name:
 Schneider
Vorname
 Hans-Rolf
geboren
 9. 6. 46

SCHNEIDER
HANS-ROLF
09 06 1946 — Vorlage

1

2

Eingabe

Prägestation — Prägeform
— transparente PVC-Folie

10

Scheibenstanze

11

Identifikationskarten
mit Reliefgitterbild

SCHNEIDER
HANS-ROLF
09 06 1946

13

elektrofotografische Kopiervorrichtung

3

Lochstanze

9

Einleger

12

Zwischen-speicher

5

Kaschierpresse
und
Stanze

6

Speicher für Kartenkern-material

4

Speicher für Schutzfolien

7

0012374

FIG.3

Indentifikationskarten
mit Hologramm

Antrag
Name:
  Schneider
Vorname
  Hans - Rolf
geboren
  9. 6. 46

SCHNEIDER
HANS-ROLF
09 06 1946

Vorlage

Filmstanze

holographischer
Aufnahmefilm

Eingabe

elektrofotografische
Kopiervorrichtung

Lochstanze
und
Filmeinleger

holographische
Kamera

Zwischenspeicher

Kaschierpresse
und
Stanze

Speicher für
Kartenkernmaterial

Speicher für
Schutzfolie

0012374